# EUROPÄISCHE PATENTSCHRIFT

(11) **EP 0 923 775 B1**
(45) Veröffentlichungstag und Bekanntmachung des Hinweises auf die Patenterteilung: **13.06.2001**
(21) Anmeldenummer: 97944776.0
(22) Anmeldetag: 21.08.1997
(51) Int. Cl.: G21C 3/326, G21C 21/00

(54) **FÜHRUNGSROHR FÜR DRUCKWASSERREAKTOR-BRENNELEMENT UND EIN ENTSPRECHENDES HERSTELLUNGSVERFAHREN**
GUIDE TUBE FOR PRESSURIZED WATER REACTOR FUEL ELEMENT AND CORRESPONDING PRODUCTION PROCESS
TUBE DE GUIDAGE POUR ELEMENT COMBUSTIBLE DE REACTEUR A EAU SOUS PRESSION ET PROCEDE DE PRODUCTION CORRESPONDANT

(30) Priorität: 04.09.1996 DE 19635927
(43) Veröffentlichungstag der Anmeldung: 23.06.1999
(73) Patentinhaber: SIEMENS AKTIENGESELLSCHAFT, 80333 München (DE)
(72) Erfinder: GARZAROLLI, Friedrich, D-91315 Höchstadt (DE); POHLMEYER, Ingo, D-90489 Nürnberg (DE); GRIMMELSMANN, Theo, D-49186 Bad Iburg (DE); SCHAA, Alwin, D-47199 Duisburg (DE)
(74) Vertreter: Mörtel, Alfred, Dr. Dipl.-Phys.
(86) Internationale Anmeldenummer: EP9704559
(87) Internationale Veröffentlichungsnummer: WO9810427

(56) Entgegenhaltungen:
- WO-A-95/01639
- US-A- 4 684 504
- US-A- 4 755 351
- PATENT ABSTRACTS OF JAPAN vol. 009, no. 104, 8.Mai 1985 & JP 59 229475 A (HITACHI SEISAKUSHO KK)

## Beschreibung

Die Erfindung betrifft ein Führungsrohr für ein Brennelement eines Druckwasserreaktors nach dem Oberbegriff des Anspruchs 1.

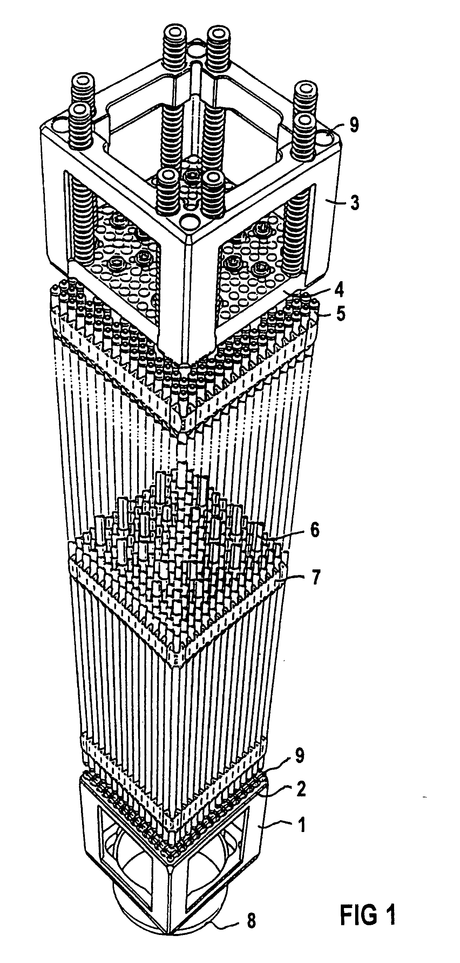

- FIG 1: zeigt den prinzipiellen Aufbau eines Brennelements für einen Druckwasserreaktor nach dem Stand der Technik.

Am unteren Ende des Brennelements befindet sich ein Fuß 1, der nach oben durch eine untere Lochplatte (Fußplatte) 2 abgeschlossen wird. Am oberen Ende des Brennelements befindet sich der Kopf 3, der eine obere Lochplatte (Deckplatte) 4 besitzt. Zwischen der Fußplatte 2 und der Deckplatte 4 befinden sich die Brennstäbe 5, deren obere Enden sich unterhalb der Deckplatte 4 befinden. Zwischen den oberen Brennstabenden und der Deckplatte 4 verbleibt also ein Zwischenraum. Der Abstand zwischen Fußplatte 2 und Deckplatte 4 wird dadurch gewährleistet, daß zwischen der Fußplatte 2 und der Deckplatte 4 sich Führungsrohre 6 befinden, die an der Fußplatte 2 befestigt sind und auf derem oberen Ende die Deckplatte 4 befestigt ist. Zwischen der Fußplatte und der Deckplatte 4 sind Abstandhalter 7 angebracht. Dabei handelt es sich um ein aus Stegen bestehendes Gitter, durch dessen Gittermaschen die Brennstäbe 5 und die Führungsrohre 6 geführt sind. Am unteren Ende wird das Brennelement mit einem Einführstutzen 8 in die untere Kerngitterplatte des Reaktors eingesetzt. Am oberen Ende des Kopfes 3 sind Löcher 9 für Führungsstifte des oberen Kerngitters vorgesehen, durch welche das Brennelement oben im Reaktor gehalten wird. Das Kerngitter selbst ist in der Figur 1 nicht dargestellt.

Die Hüllrohre für die Brennstäbe 5 und die Führungsrohre 6 bestehen aus der Reaktorlegierung Zirkaloy.

Während des Reaktorbetriebs werden die Hüllrohre der Brennstäbe 5 und die Führungsrohre 6 einer Strahlung durch thermische Neutronen ausgesetzt. Es wurde festgestellt und ist seit Längerem bekannt, daß durch die thermische Neutronenstrahlung ein axiales Wachstum der Hüllrohre der Brennstäbe 5 und der Führungsrohre 6 hervorgerufen wird. Das Wachstum der Hüllrohre der Brennstäbe 5 ist insofern nicht problematisch, als deren freies oberes Ende soweit unter der Deckplatte 4 befindlich ist, daß die Brennstäbe 5 sich in den freien Raum unter der Deckplatte 4 ausdehnen können.

Schwierigkeiten bereitet jedoch das Längenwachstum der Führungsrohre 6. Die Führungsstifte, die das Brennelement am oberen Kerngitter halten, sind relativ kurz. Das frische Brennelement muß daher bereits so lang sein, daß die Führungsstifte des Kerngitters genügend tief in die Löcher 9 des Kopfes 3 eintauchen können. Ist das Brennelement zu kurz, so wird das Brennelement nicht genügend gehalten und es können während des Betriebes des Reaktors die Führungsstifte abbrechen. Ist das Brennelement jedoch so lang, daß die Führungsstifte des Kerngitters sicher in die Löcher 9 im Kopf 3 des Brennelementes hineinragen, so kann es dazu kommen, daß infolge des Längenwachstums der Führungsrohre 6 der Kopf des Brennelements an das Kerngitter anstößt. Dies kann zu einer Verbiegung der Führungsrohre 6 führen und das Brennelement muß rechtzeitig ausgetauscht werden, um Störungen und Schäden zu vermeiden.

Es wurde festgestellt, daß beim Herstellungsprozeß der Führungsrohre 6 diesen eine Textur aufgeprägt wird, die im wesentlichen für das axiale Wachstum der Führungsrohre 6 verantwortlich ist. Bei den verwendeten Legierungen, Zirkaloy-2 und Zirkaloy-4, handelt es sich um genormte Reaktorlegierungen. Diese Legierungen haben bei Raumtemperatur eine hexagonal dichtest gepackte kristallographische Struktur (hdp). Bei Temperaturen von ca. 790 °C wandelt sich das hexagonal dicht gepackte Gitter in eine raumzentrierte Gittersturktur um, wobei die Umwandlung bei etwa 1010 °C abgeschlossen ist. Die hexagonal dichteste Struktur bezeichnet man als α-Phase, die kubisch raumzentrierte Struktur als β-Phase. Bei der üblichen Herstellung von Rohren durch das Pilger-Verfahren bei einer Temperatur, in der hexagonal dichteste Packung vorliegt, entsteht im Rohr eine Textur dergestalt, daß die hexagonal dichtest gepackten Kristallite mit ihrer c-Achse (d.h. <0001>-Richtung), also mit der Richtung, die in der Achse der hexagonalen Säule liegt, sich radial, also zur Rohrachse hin, anordnen. Infolge der thermischen Neutronenbestrahlung wird der Gitterabstand in c-Richtung verkürzt, während er in Richtung der anderen Kristallachsen zunimmt. Da die Kristallachsen, in denen der Atomgitterabstand zunimmt, in axialer Richtung der Führungsrohre 6 liegen, verursacht diese Änderung der Gitterkonstanten insgesamt ein Längenwachstum der Rohre 6.

Die Textur wird beim Pilgern häufig bewußt hergestellt, da sie die Korrosionsbeständigkeit und andere Eigenschaften in einer Weise beeinflußt, die bei Brennnstab-Hüllrohren erwünscht ist, oder es wird versucht, durch ein β-Glühen oder Rekristallisationsglühen die Textur weitgehend auszulöschen.

Der Erfindung liegt die Aufgabe zugrunde, ein Führungsrohr für Druckwasserreaktor-Brennelemente mit minimiertem strahlungsinduzierten Wachstum und ein Verfahren zu deren Herstellung bereitzustellen. Ein solches Führungsrohr besitzt gemäß der Erfindung im fabrikfrischen Zustand innere Spannungen, die in axialer Richtung kontrahierend wirken.

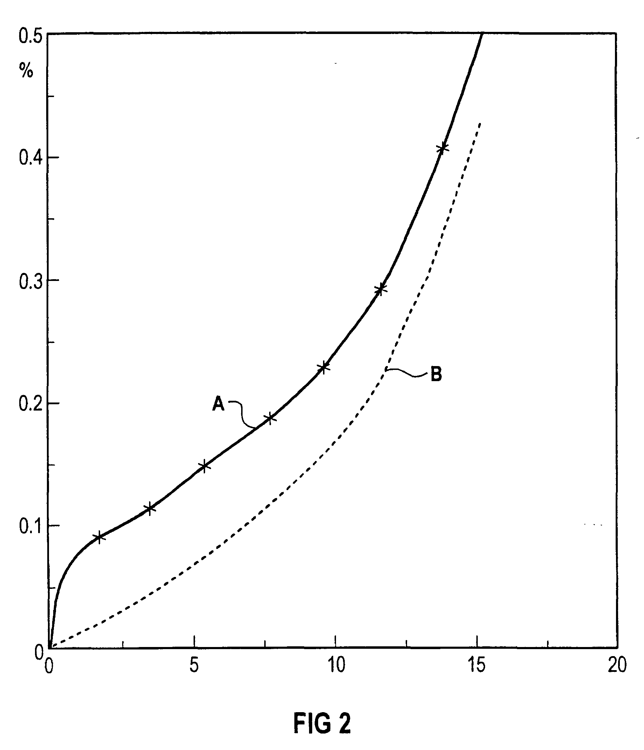

Die Erfindung geht von Versuchen aus, bei denen das Wachstum der Führungsrohre 6 zu Beginn der Beaufschlagung durch thermische Neutronen einen steilen Anstieg zeigt, der mit zunehmender Dosis flacher wird. Nach längerer Strahlenbelastung nimmt die Wachstumsrate wieder zu. Es ergibt sich demnach bei einer Auftragung des relativen Längenwachstums eines Führungsrohres 6 über dessen Strahlungsbelastung eine Kurve, die in einem kurzen Anfangsbereich steil, danach über einen längeren Bereich schwach und zu zunehmend größeren Strahlenbelastungen hin wieder zunehmend steil ansteigt. Dies ist in der Kurve A der FIG 2 gezeigt. Die Erfindung geht dabei davon aus, daß die Einsatzdauer der Führungsrohre entsprechend verläuft, wenn das starke Anfangswachstum zu Beginn der Bestrahlung durch entsprechende Maßnahmen bei der Fertigung kompensiert wird. Dann erfolgt nämlich das Wachstum nach der Kurve B der FIG 2.

Man könnte versuchen, durch eine Glühung, insbesondere ein β-Quenching nach einer Kaltverformung (z.B. der letzten Kaltverformung) und möglicherweise eine streng kontrollierte Wärmebehandlung (z.B. Spannungsarm-Glühen, "Stress relief annealing") die Textur möglichst auszulöschen, um den Einfluß der Neutronenstrahlung vorwegzunehmen. Jedoch zeigt sich, daß der Einfluß dieser Maßnahmen starken Exemplarschwankungen ausgesetzt ist und nicht zuverlässig genug zu einem ausreichenden Erfolg führt. Die Erfindung sieht diese Maßnahme daher lediglich als zusätzliche Option vor der abschließenden Behandlung des Führungsrohres vor.

Dieses hohe Wachstum im Anfangsbereich thermonuklearer Beanspruchung läßt sich dadurch unterdrücken, daß den Führungsrohren 6 Eigenspannungen aufgeprägt werden, die unter Bestrahlung freigesetzt werden und dabei zu einer Längenkontraktion führen, die dem strahlungsinduzierten Längenwachstum entgegenwirkt.

Diese Eigenspannungen werden gemäß der Erfindung dadurch erzeugt, daß das Führungsrohr bei einem die Rohrherstellung abschließenden Ausrichtungsvorgang gelängt wird. Hierzu wird von einem Rohr ausgegangen, das zunächst so hergestellt wurde, daß seine Länge kleiner ist als die Endlänge des Führungsrohres 4. Die Längung des Rohrs beträgt dabei mindestens 0,3 %, vorzugsweise mindestens etwa 0,4 % bis 0,5 % der Länge des Ausgangsrohres.

Dabei ist unter Längung ein Verfahren verstanden, bei dem eine Längenänderung dadurch erfolgt, daß - zumindest zusätzlich zu anderen Verformungskräften - in Längsrichtung des Rohres gerichtete Zugkräfte am Rohr angreifen.

Die Rohrlängung kann im Prinzip durch Strecken erfolgen. Unter Strecken wird hierbei ein Vorgang verstanden, bei dem die Verlängerung des Rohres durch Druck senkrecht zur Längsrichtung (Streckrichtung) erfolgt. So kann z.B. das Rohr mittels Zugkräften zuerst über eine einseitig am Rohr angreifende erste Walze gebogen und anschließend über eine zweite Walze, die von der gegenüberliegenden Seite aus am Rohr angreift, wieder zurückgebogen werden. Unter mehrfacher Umkehrung der Bewegungs- und Zugrichtung des Rohres werden dabei nicht nur anfängliche Krümmungen des Rohres ausgerichtet, sondern das gerade gerichtete Rohr ist auch etwas länger geworden. Die Streckgrenze des Materials ist dabei höchstens an einigen begrenzten lokalen Bereichen des Rohrs erreicht worden. Verfahrenstechnisch bietet es sich an, die Längung des Rohres beim Richten auf einer Richtbank zu bewirken. Dabei wird das Rohr infolge des Drucks der Richtbankwalzen gestreckt.

Häufig ist es ohnehin vorgesehen, eventuelle Verbiegungen des Rohres zu beseitigen, indem das Rohr auf einer Streckbank routinemäßig geringfügig gestreckt wird. Jedoch ist dieses Verfahren schlecht kontrollierbar und führt möglicherweise nicht auf der ganzen Länge des Führungsrohres zu einer gleichmäßigen Längung.

Bevorzugt wird daher das Führungsrohr gereckt.

Unter Recken wird eine Verlängerung des Rohres durch Zugeinwirkung unter Überschreitung der Streckgrenze verstanden. Insbesondere werden als Verformungskräfte praktisch nur Kräfte angewendet, die das Rohr in seiner Längsrichtung ziehen (es treten also praktisch keine Querkräfte auf), wobei die Zugkräfte so eingestellt werden können, daß die Streckgrenze in allen Bereichen des Rohres erreicht und überschritten wird.

Dazu kann das Rohr auf einer Reckbank gereckt werden. Infolge der Zugbeanspruchung, die das Rohr auf der Reckbank erfährt, werden hier die Eigenspannungen im Rohr weitgehend so aufgebaut, daß sie in axialer Richtung des Rohres liegen. Dieses Recken ist leicht kontrollierbar und führt zu einer nach Betrag und Richtung bei allen hergestellten Rohren gleichförmigen Eigenspannungscharakteristik.

Da beim Pilgeren eine Textur entstehen kann, die für Führungsrohre nachteilig wäre, wird eine vor dem Längen des Rohres durchgeführte Glühung im β-Gebiet (oder eventuell α-β-Zweiphasengebiet) vorgeschlagen. Dadurch läßt sich die Textur des Ausgangsrohres in gewissem Umfange beseitigen. Hierdurch wird eine weitere Reduzierung des strahleninduzierten Rohrwachstums bewirkt.

Die auf die beschriebene Weise herstellbaren Führungsrohre lassen sich verwenden in einem eingangs geschilderten Brennelement. Sie weisen in axialer Richtung wirkende innere Spannungen auf, die unter dem Einfluß thermonuklearer Strahlenbelastung und der damit verbundenen Zuführung von Energie freigesetzt werden und zu einer Kontraktion des Rohres führen. Damit der Kontraktionseffekt sich hinreichend auswirkt, um das starke Anfangswachstum der Führungsrohre 6 hinreichend zu unterdrücken bzw. diesem Anfangswachstum entgegenzuwirken, ist es zweckmäßig, daß die intrinsischen Spannungen 3 N/mm² überschreiten. Diese inneren Spannungen werden erzeugt durch eine Längung des Führungsrohres. Dabei ist für die Rohre mit intrinsischen Spannungen kennzeichnend, daß sie eine größere Länge aufweisen als die selben Rohre, wenn sie sich in einem spannungsarmen Zustand befänden. Für das Maß der Verlängerung wird eine Mindestgrenze von 0,3 % vorgeschlagen, wobei 0,4 % oder 0,5 % noch vorteilhafter sein können.

## Patentansprüche

1. Brennelement eines Druckwasser-Kernreaktors mit einer oberen und unteren Deckplatte (4 bzw. 2), an denen Führungsrohre (6) für Steuerelemente befestigt sind, die Abstandhalter (7) tragen, und mit einem Bündel von Brennstäben (5), die um die Führungsrohre (6) herum angeordnet und in Maschen der Abstandhalter (7) gehalten sind,
**dadurch gekennzeichnet,** daß die Führungsrohre (6) in axialer Richtung kontrahierend wirkende innere Spannungen besitzen.

2. Brennelement nach Anspruch 1,
**dadurch gekennzeichnet,** daß die inneren Spannungen 3 N/mm² überschreiten.

3. Brennelement nach einem der Ansprüche 1 oder 2,
**dadurch gekennzeichnet,** daß die Führungsrohre (6) mit den inneren Spannungen, verglichen mit einem spannungsarmen Zustand der Führungsrohre (6), eine größere Länge aufweisen.

4. Brennelement nach Anspruch 3,
**dadurch gekennzeichnet,** daß die Länge der Führungsrohre (6) mit den inneren Spannungen mindestens 0,3 % größer ist als im spannungsfreien Zustand.

5. Verfahren zur Herstellung eines Führungsrohres (6) aus Zirkonium-Legierungen für ein Brennelement eines Druckwasserreaktors,
**dadurch gekennzeichnet,** daß ein Rohr mit einer unter der vorgegebenen Endlänge liegenden Länge hergestellt und das Rohr anschließend auf die vorgegebene Endlänge gelängt wird.

6. Verfahren nach Anspruch 5,
**dadurch gekennzeichnet,** daß das Rohr um mehr als 0,3 %, vorzugsweise mindestens 0,4 % bis 0,5 %, gelängt wird.

7. Verfahren nach Anspruch 5,
**dadurch gekennzeichnet,** daß das Rohr durch Richten auf einer Richtbank gestreckt wird.

8. Verfahren nach Anspruch 5 oder 6,
**dadurch gekennzeichnet,** daß das Rohr durch Zugkräfte auf einer Reckbank gereckt wird.

9. Verfahren nach einem der Ansprüche 5 bis 8,
**dadurch gekennzeichnet,** daß das Rohr vor seiner Längung im Zweiphasengebiet geglüht oder rekristallisationsgeglüht, insbesondere einem β-Quenching unterworfen, wird.

## Claims

1. Fuel element of a pressurized water nuclear reactor, with an upper and a lower cover plate (4 and 2), to which guide tubes (6) for control elements are fastened, said guide tubes carrying spacers (7), and with a bundle of fuel rods (5) which are arranged around the guide tubes (6) and are held in meshes of the spacers (7), characterized in that the guide tubes (6) possess internal stresses having a contracting effect in the axial direction.

2. Fuel element according to Claim 1, characterized in that the internal stresses exceed 3 N/mm2.

3. Fuel element according to one of claims 1 or 2, characterized in that the guide tubes (6) with the internal stresses have a greater length, as compared with a stress-relief state of the guide tubes (6).

4. Fuel element according to Claim 3, characterized in that the length of the guide tubes (6) with the internal stresses is at least 0.3% greater than in the stress-free state.

5. Method for producing a guide tube (6) from zirconium alloys for a fuel element of a pressurized water reactor, characterized in that a tube having a length which is below the predetermined final length is produced and the tube is subsequently lengthened to the predetermined final length.

6. Method according to Claim 5, characterized in that the tube is lengthened by more than 0.3%, preferably at least 0.4% to 0.5%.

7. Method according to Claim 5, characterized in that the tube is stretched by straightening on a straightening bench.

8. Method according to Claim 5 or 6, characterized in that the tube is strained by means of tensile forces on a straining bench.

9. Method according to one of Claims 5 to 8, characterized in that the tube is annealed or recrystallization-annealed, in particular subjected to β-quenching, in the two-phase zone before it is lengthened.

## Revendications

1. Assemblage combustible d'un réacteur nucléaire à eau sous pression, comportant une plaque (4) supérieure de recouvrement et une plaque (2) inférieure auxquelles sont fixés des tubes (6) de guidage pour des éléments de commande, qui portent des entretoises (7), et comportant un assemblage de crayons (5) combustibles qui sont montés autour des tubes (6) de guidage et qui sont maintenus dans des mailles des entretoises (7),
caractérisé en ce que les tubes (6) de guidage ont des tensions internes agissant en contraction dans la direction axiale.

2. Assemblage combustible suivant la revendication 1, caractérisé en ce que les tensions internes sont supérieures à 3 N/mm².

3. Assemblage combustible suivant l'une des revendications 1 ou 2, caractérisé en ce que les tubes (6) de guidage ayant les tensions internes ont, comparé à un état pauvre en tension des tubes (6) de guidage, une plus grande longueur.

4. Assemblage combustible suivant la revendication 3, caractérisé en ce que la longueur des tubes (6) de guidage ayant les tensions internes est au moins plus grande de 0,3 % que la longueur à l'état exempt de tension.

5. Procédé de production d'un tube (6) de guidage en des alliages de zirconium pour un assemblage combustible d'un réacteur à eau sous pression, caractérisé en ce que l'on produit un tube ayant une longueur inférieure à la longueur finale prescrite et on allonge ensuite le tube à la longueur finale prescrite.

6. Procédé suivant la revendication 5, caractérisé en ce que le tube est allongé de plus de 0,3 %, de préférence d'au moins 0,4 % à 0,5 %.

7. Procédé suivant la revendication 5, caractérisé en ce que le tube est étiré par dressage sur une dresseuse.

8. Procédé suivant les revendications 5 ou 6, caractérisé en ce que le tube est étiré par des forces de traction sur une étireuse.

9. Procédé suivant l'une des revendications 5 à 8, caractérisé en ce que le tube est, avant son allongement, recuit dans le domaine à deux phases ou soumis à un recuit de recristallisation, notamment soumis à un quenching β.
